# EUROPEAN PATENT APPLICATION

(11) **EP 3 334 065 A1**
(43) Date of publication of application: **13.06.2018**
(21) Application number: 16306648.3
(22) Date of filing: 09.12.2016
(51) Int. Cl.: H04B 10/516

(54) **BLOCK CONSTELLATION SELECTION MODULATION FOR OVERLAID INFORMATION TRANSMISSION**

(71) Applicant: Alcatel Lucent, 91620 Nozay (FR)
(72) Inventor: ERIKSSON, Tobias, 70435 Stuttgart (DE)
(74) Representative: MERH-IP Matias Erny Reichl Hoffmann Patentanwälte PartG mbB

(57) **Abstract**

This application relates to an optical modulation method. The method comprises arranging a first data stream in a plurality of symbol blocks, selecting at least one block modulation scheme from a plurality of block modulation schemes for a symbol block based on a second data stream, generating a plurality of block data symbols for the symbol block based on the first data stream and the selected block modulation scheme, and modulating an optical signal using the generated block data symbols. The application also relates to an optical demodulation method that comprises receiving a plurality of block data symbols arranged in one or more symbol blocks, converting the plurality of block data symbols of symbol blocks and determining at least one applied modulation scheme for each of the symbol blocks. The optical demodulation method also comprises obtaining a second data stream based on the determined modulation schemes applied to the symbol blocks and obtaining a first data stream from the block data symbols of the symbol blocks.

## Description

### Technical Field

This application relates to modulation/demodulation methods and devices for use in the field of optical communications, particularly for transmitting overlaid information in optical networks.

### Background

Nowadays, network management information can be transmitted using a slow intensity modulation on top of the conventional modulation scheme (e.g. by applying the Nokia Wavetracker technology). This application can be used for simple detection of the amplitude evolution at low bit rates. However, for some applications, higher data rates are needed, especially if it is desired to pass information to the digital signal processing or the forward error correction blocks.

Accordingly, there is a need to transmit overhead information in optical networks using an efficient and cost-effective way.

### Summary

The present document proposes a new scheme for optical modulation and demodulation. In particular, the present document discloses methods and devices having the features of the respective independent claims for generating an optical signal which carries overhead information to be transmitted in optical networks.

An aspect of the disclosure relates to an optical modulation method. The method comprises arranging a first data stream in a plurality of blocks. In general, a data stream may be carried by a number of symbols for transmission using a modulation format scheme, and the symbols may be divided into symbol groups regarded as blocks of symbols. The block size (number of symbols per block) may be fixed or adaptive. Further, a symbol may have one of a plurality of complex symbol values which are defined by the applied modulation format to represent data (e.g. binary data) of a data stream. In this way, the first data stream may be carried by the symbols of the plurality of symbol blocks for transmission.

According to the disclosure, the bits of the first data stream may be arranged into symbol blocks to carry further data of a second stream by using different modulation formats for the individual blocks. To achieve this, the method also comprises selecting at least one block modulation scheme from a plurality of available block modulation schemes for a symbol block. The at least one selected modulation scheme may be applied to the entire block or portions of the block. The selection may be based on the second data stream. Subsequently, the method further comprises generating a plurality of block data symbols for the symbol block based on the first data stream and the selected at least one block modulation scheme for the block. In an example, one block modulation scheme is selected for a block from two available block modulation schemes based on a one bit value of the second data stream. In other embodiments, a combination of two block modulation schemes is selected for a block based on a two bit value of the second data stream. In this case, the first half of the block data symbols is modulated with the first block modulation scheme of the combination, and the second half of the block data symbols is modulated with the second block modulation scheme of the combination. Further examples and extensions are possible and within the scope of the present document. For example, a plurality of four block modulation schemes may be available and one thereof is selected to encode two bits of the second data stream.

Optionally, the method may further comprise encoding, prior to the selecting the block modulation scheme(s), the second data stream. In particular, the second data stream may be encoded using a predefined coding scheme (e.g. Hamming codes, Reed-Solomon codes etc.), so that a certain bit group in the second data stream can be mapped to another bit group having added redundancy which may have a different number of bits than the certain bit group. Typically, the another bit group is larger to accommodate the redundancy added by the encoding. Accordingly, the selection may be based on the encoded second data stream. In other words, the method comprises selecting a plurality of block modulation schemes for the symbol block based on the encoded second data stream. For example, one block modulation scheme is selected for a block from two available block modulation schemes based on a one bit value of the encoded second data stream. As another example, a combination of two or more block modulation schemes is selected for a block based on two or more bits of the encoded second data stream. Further examples and extensions are possible and within the scope of the present document.

Accordingly, the first data stream may be transmitted using different modulation format schemes for the blocks which are determined based on the second data stream. The method also comprises modulating an optical signal using the generated block data symbols. By this way, the information of the second data stream can be efficiently transmitted along with the first data stream.

According to an embodiment, at least two block modulation schemes of the plurality of block modulation schemes may have a same number of constellation points. In some embodiments, one of the block modulation schemes may be a rotation of another one of the block modulation schemes. Furthermore, a block modulation scheme of the plurality of block modulation schemes may comprise a rectangular constellation scheme. For example, at least one block modulation scheme of the plurality of block modulation schemes may comprise a quadrature-phase-shift-keying (QPSK) modulation scheme or a quadrature-amplitude-modulation (e.g. m-QAM) modulation scheme. In case of a QPSK modulation scheme or an m-QAM modulation scheme, the rotation of the another one of the block modulation schemes may be 45 degree, i.e. the one of the block modulation schemes may be obtained by rotating the another one of the block modulation schemes by 45 degree (or vice versa).

In an embodiment, the arranging a first data stream in a plurality of symbol blocks may comprise encoding the first data stream into a plurality of transmit data symbols using a data modulation scheme. In particular, each of the symbol blocks may comprise one or more consecutive transmit data symbols. Besides, the block modulation schemes and the data modulation scheme may have a same number of constellation points. Moreover, the generating a plurality of block data symbols for a symbol block may comprise converting the one or more consecutive transmit data symbols within the symbol block into one or more consecutive block data symbols. As a result, the optical signal may be modulated to carry the first data stream using the selected block modulation scheme associated with the second data stream. By this way, the second data stream can be efficiently overlaid on the first data stream for transmission.

It is noted that the first data stream may be arranged in the symbol blocks based on a block length which is related to a number of the consecutive transmit data symbols or a number of the consecutive block data symbols within each of the symbol blocks. Further, the block length relates to a transmission rate of the second data stream. Thus, the transmission rate of the second data stream may be determined according to the block length. For example, a longer block length may correspond to a lower transmission rate of the second data stream, while a shorter block length may correspond to a higher transmission rate of the second data stream.

According to some embodiments, the length of a symbol block may be determined based on a signal-to-noise-ratio (SNR) value of an optical transmission using the modulated optical signal. Further, the transmission rate of the first data stream depends on the rate of the block data symbols. Accordingly, the first data stream may have a higher transmission rate than the second data stream. According to the disclosure, the second data stream may carry overhead network information, such as network management information, routing instructions or data needed for a forward error correction decoder. On the other hand, the first data stream may comprise payload data which contains actual intended messages for transportation through an optical transmission system.

Configured as above, an overlaid channel is superimposed on the conventional modulation scheme using constellation selection modulation over symbol blocks, which allows efficient transmission of an additional lower-rate data stream, e.g. overhead network information. By overlaying overhead information on the modulation scheme carrying the payload data, latency and loss in bit rate for network transmission can be avoided. Further, the proposed method is suitable for coherent detection schemes by overlaying a low-complexity channel on the conventional modulation schemes. This overlaid channel provided by the proposed method can however support an additional data stream having higher bitrate in contrast to the conventional technique using slow intensity modulation.

Another aspect of the disclosure relates to an optical demodulation method. The optical demodulation method may be used to receive data that have been transmitted using the above indicated optical modulation method. The method comprises receiving an optical signal and converting the optical signal into the electrical domain comprising a plurality of block data symbols. In particular, the block data symbols are arranged in one or more symbol blocks. The method further comprises converting the plurality of block data symbols of symbol blocks (e.g. by applying a transformation or mapping on the block data symbols) and determining at least one applied modulation scheme for each of the symbol blocks. As mentioned above, a modulation scheme may be applied by the transmitter to an entire block or portions thereof. Correspondingly, during demodulation, the applied modulation scheme may be determined based on the converted block data symbols for a portion of a received block or the entire block. The method also comprises obtaining a second data stream based on the determined one or more modulation schemes applied to the individual symbol blocks. Furthermore, the method comprises obtaining a first data stream from the block data symbols of the symbol blocks.

In some embodiments, the conversion of block data symbols may comprise a mapping of the block data symbols such that the mapped block data symbols associated with a particular modulation scheme have a characteristic value that is different to the characteristic value of mapped symbols associated with another modulation scheme. For example, each of the converted block data symbols within each symbol block may have a more or less same complex symbol value, which means that the converted block data symbols have complex symbol values that are close to each other. In other words, the block data symbols in each symbol block may be mapped to complex symbol values corresponding to constellation points located in a same position or close to each other in the constellation. As mentioned above, a selected modulation scheme may be applied to only a portion of a block. In this case, the complex symbol values of such portion are mapped to similar constellation points. Further, the applied modulation scheme for a symbol block or a portion thereof may be determined based on the substantially same complex symbol value of the converted symbols in the block. As mentioned, the converted block data symbols in a symbol block or a portion thereof may have complex symbol values corresponding to given constellation points that allow a determination of the applied modulation scheme.

Thus, the determination of the applied modulation scheme can be based on determining whether the complex symbol value of an individual converted block data symbol (e.g. as indicated by phase and/or amplitude of the converted block data symbol) reaches a threshold value. Besides, the determination of the applied modulation scheme can be based on determining a polarization state of the optical signal which is associated with the converted block data symbol. More specifically, the phase of a converted block data symbol for an applied modulation scheme may be smaller than a phase threshold while the phase of a converted block data symbol for another applied modulation scheme may be larger than a phase threshold. Alternatively, the amplitude of a converted block data symbol for an applied modulation scheme may be smaller than an amplitude threshold while the amplitude of a converted block data symbol for another applied modulation scheme may be larger than the amplitude threshold.

The determination based on the amplitude threshold can be based on, for example, determining whether the complex symbol values of the converted block data symbols in a symbol block have a same sign value in their real components (e.g. plus or minus for the real part of the complex symbol values where real part equals zero is regarded as the amplitude threshold), which is indicative of the applied modulation scheme for the symbol block. Accordingly, the second data stream may be determined, for example, according to the symbol signs of the symbols in a symbol block. Similarly, one can also determine whether the complex symbol values of the converted block data symbols in a symbol block have a same sign in their imaginary components (e.g. plus or minus for the imaginary part of the complex symbol values where imaginary part equals zero is regarded as the phase threshold), which is indicative of the applied modulation scheme for the symbol block. Alternatively, any complex value may be used as the threshold value (e.g. a phase threshold) so that the applied modulation scheme can be determined based on determining whether the phase of a complex symbol value of a converted block data symbol exceeds or is below the phase threshold.

In embodiments, the polarization state associated with a converted block data symbol for an applied modulation scheme may be transverse-electric (TE) polarization while the polarization state associated with a converted block data symbol for another applied modulation scheme may be transverse-magnetic (TM) polarization, or vice versa. Alternatively, the first data stream may be transmitted using the state-of-polarization within the block of symbols. E.g., the symbols within one block may have circular polarization and the symbols within another block may have linear polarization. Further, more than two states-of-polarizations may be used to either map binary data or to map more than one bit per block. In general, the metric to detect the overlaid information could be real valued, complex valued, multidimensional (e.g. the complex value in the two orthogonal polarization or consecutive time slots), or the state-of-polarization.

In detail, each of the symbol blocks may comprises one or more consecutive block data symbols. According to an embodiment, the converting the block data symbols may comprise converting the one or more consecutive block data symbols within each of the symbol blocks. Furthermore, the method may comprise averaging, for each of the symbol blocks or portions thereof, the converted one or more consecutive block data symbols of a block into an average block data symbol of the block. In some embodiments, the average block data symbol in a symbol block has a particular characteristic complex symbol value. The applied modulation scheme for the symbol block may be determined based on the complex symbol value of the average block data symbol by comparing the average block data symbol with a complex threshold as explained above for the converted block data symbols. In some embodiments, the converted data symbols and their average have only a real value and the determination of the applied modulation scheme can be made on real values. In some embodiments, the converted symbols have a multidimensional value, e.g. four dimensional information using both polarizations.

In particular, the block data symbols may be arranged in the one or more symbol blocks based on a block length which is related to a number of the consecutive block data symbols within each of the symbol blocks. Accordingly, the converted one or more consecutive block data symbols in a symbol block may be averaged over the block length.

Besides, the length of a symbol block may be determined based on a signal-to-noise-ratio (SNR) value of an optical transmission carrying the optical signal because the averaging improves the reliability of the modulation scheme determination. Longer blocks allow more averaging and may therefore applied to transmission links with lower SNR. In embodiments, the second data stream may have a transmission rate depending on the block length. For example, a longer block length may correspond to a lower transmission rate of the second data stream, but achieves a more reliable transmission of the second data stream. Correspondingly, a shorter block length may correspond to a higher transmission rate of the second data stream, but is less robust to noise on the transmission line. In embodiments, the second data stream may carry overhead network information, such as network management information, routing instructions or data needed for a forward error correction decoder.

Similar to the embodiments as indicated above, one or more of the block data symbols within each of the symbol blocks may have been generated by an optical transmitter using a rectangular constellation modulation. More specifically, one or more of the block data symbols within the symbol blocks may have been generated using a quadrature-phase-shift-keying (QPSK) modulation or a quadrature-amplitude-modulation (e.g. m-QAM) modulation. In case that one or more of the block data symbols within each of the symbol blocks have been generated using a QPSK modulation or an m-QAM modulation, the one or more of the block data symbols in each symbol block may be converted using a power-of-four operation. Also, the first data stream may be obtained from the block data symbols of the symbol blocks based on the obtained second data stream. Alternatively, the first data stream may be obtained from the block data symbols of the symbol blocks based on the determined modulation schemes by applying the respective determined modulation scheme to the symbol blocks.

Configured as above, the proposed demodulation method considers a constellation selection modulation for transmission of an additional data stream with lower bit rate. It is appreciated that a larger block length may be implemented to overlay a high quality channel over the conventional modulation scheme. In other words, the constellation selection modulation is applied over blocks of symbols to create an overlaid channel with increased SNR resulting from the averaging over the blocks. Furthermore, the bit rate and performance of the overlaid modulation channel is flexible and can be easily changed by adapting the block length.

Another aspect of the disclosure relates to an optical modulation device for overlaying a second data stream on a first data stream. The optical modulation device can be used for implementing the optical modulation method as indicated above. Accordingly, the device comprises a processor configured to arrange the first data stream in a plurality of symbol blocks. The processor is configured to also select at least one block modulation scheme from a plurality of block modulation schemes for a symbol block based on a second data stream. The processor is further configured to generate a plurality of block data symbols for the symbol block based on the first data stream and the selected at least one block modulation scheme. Moreover, the optical modulation device comprises an optical modulator configured to modulate an optical signal using the generated block data symbols.

Configured as above, the proposed optical modulation device overlays a channel which is superimposed on the conventional modulation scheme using constellation selection modulation over blocks of data, thereby allowing efficient transmission of an additional lower-rate data stream, e.g. overhead network information. In particular, latency and reduction in bit rate for network transmission can be avoided by overlaying overhead information on the modulation scheme carrying the payload data. Further, the proposed optical modulation device overlaying a low-complexity channel on the conventional modulation schemes can be also applied for coherent detection schemes. Such a low-complexity channel provided according to the present disclosure can however support an additional data stream having higher bitrate in contrast to the conventional technique using slow intensity modulation.

Another aspect of the disclosure relates to an optical demodulation device for receiving a second data stream overlaid on a first data stream. The optical demodulation device can be used for implementing the optical demodulation method as indicated above. The device comprises a signal converting module to convert an optical signal into a corresponding electrical signal. In general, the electrical signal comprises a plurality of block data symbols. Especially, the block data symbols may be arranged in one or more symbol blocks. The device also comprises a processor. The processor is configured to convert the plurality of block data symbols of symbol blocks and determine at least one applied modulation scheme for each of the symbol blocks. The processor is also configured to obtain a second data stream based on the determined modulation schemes applied to the symbol blocks. Further, the processor is configured to obtain a first data stream from the block data symbols of the symbol blocks.

Configured as above, a constellation selection modulation for transmission of an additional data stream with lower bit rates is considered in the proposed optical demodulation device. In particular, a larger block length may be implemented to overlay a high-quality and low-bitrate channel over the conventional modulation scheme. It is appreciated that the constellation selection modulation is applied over blocks of symbols to create an overlaid channel with increased SNR stemming from the averaging over the blocks, which enhances the flexibility of the overlaid channel by adapting the block length. Moreover, the proposed demodulation device can efficiently recover the first data stream from the block data symbols of the symbol blocks using the information of the obtained second data stream and/or the determined modulation schemes applied to the symbol blocks.

Implementations of the devices may include using, but not limited to, one or more processor, one or more application specific integrated circuit (ASIC) and/or one or more field programmable gate array (FPGA). Implementations of the apparatus may also include using other conventional and/or customized hardware such as software programmable processors.

It will be appreciated that method steps and device features may be interchanged in many ways. In particular, the details of the disclosed device can be implemented as a method and vice versa, as the skilled person will appreciate.

### Brief Description of the Figures

Some embodiments of apparatus and/or methods in accordance with embodiments of the present invention are now described, by way of example only, and with reference to the accompanying drawings, in which:
**Fig. 1(a)** schematically illustrates a possible implementation of an optical modulation device **100** according to embodiments of the disclosure;
**Fig. 1(b)** schematically illustrates a possible implementation of an optical modulation device **100** according to embodiments of the disclosure;
**Fig. 1(c)****-(d)** schematically illustrate possible coding schemes for block modulation selections according to embodiments of the disclosure;
**Fig. 1(e)** schematically illustrates a possible implementation for block modulation selections based on an encoded overhead bit stream according to embodiments of the disclosure;
**Fig. 2** schematically illustrates processing steps for the proposed optical modulation method according to embodiments of the disclosure;
**Fig. 3(a)** schematically illustrates a possible implementation of an optical demodulation device **300a** according to embodiments of the disclosure;
**Fig. 3(b)** schematically illustrates a possible implementation of an optical demodulation device **300b** according to embodiments of the disclosure;
**Fig. 4(a)** schematically illustrates a possible implementation of the block decoding function **302** according to embodiments of the disclosure;
**Fig. 4(b)** graphically illustrates a possible implementation of block modulation selections according to embodiments of the disclosure;
**Fig. 4(c)** graphically illustrates a possible implementation of combined block modulation selections according to embodiments of the disclosure;
**Fig. 5** schematically illustrates processing steps for the proposed optical demodulation method according to embodiments of the disclosure;
**Fig. 6** graphically illustrates a constellation diagram of the received block data symbols according to embodiments of the disclosure; and
**Fig. 7** graphically illustrates a constellation diagram of the converted block data symbols after the block decoding function **302** according to embodiments of the disclosure;
**Fig. 8** graphically illustrates the dependency of the block length on the bit error rate (BER) as a function of SNR according to embodiments of the disclosure.

### Detailed Description

A basic aspect of this disclosure relates to optical modulation/demodulation methods and optical modulation/demodulation devices for use in the field of optical communications, particularly for performing optical modulation and demodulation at an optical transmitter and an optical receiver in a coherent optical transmission system, respectively, for transmitting overhead information along with payload data in optical networks.

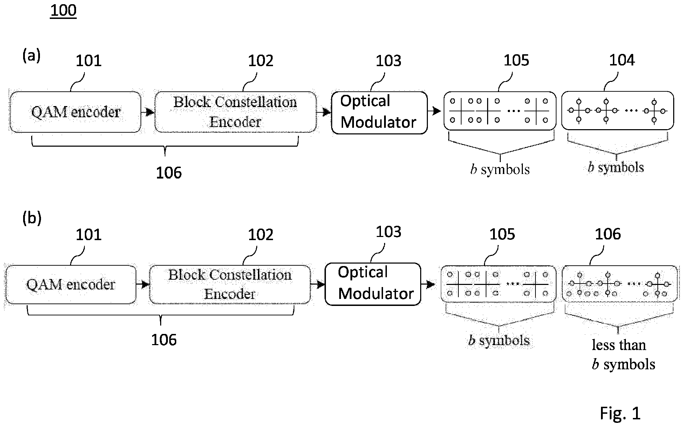

**Fig. 1(a)** is a schematic illustration of a possible implementation of an optical modulation device **100** according to embodiments of the disclosure. The optical modulation device **100** can be used, for example, in a transmitter of an optical communication system, to generate a modulated signal carrying data streams received by the optical modulation device **100.** The optical modulation device **100** includes a processor **106** (e.g. a digital signal processor (DSP)) for encoding an incoming data stream to generate a modulating signal, such as an electrical signal, which contains symbols related to the incoming data streams. Such symbols may have complex values and are regarded as data symbols. According to the embodiment, the incoming data streams received by the optical modulation device **100** include a payload data stream and an overhead data stream. In general, the overhead data stream may carry overhead network information, such as network management information, routing instructions or data needed for a forward error correction decoder but is not limited thereto.

To encode the received incoming data streams, the processor **106** of the optical modulation device **100** performs a data encoding function **101** for the payload data stream and a block encoding function **102** for the overhead data stream. The data encoding function **101** encodes the payload data stream into a plurality of transmit data symbols using a data modulation scheme and arranges the payload data stream in a plurality of symbol blocks. For example, the data modulation scheme can be any complex modulation scheme such as QPSK/QAM modulation schemes. The data encoding function **101** may thus be regarded as a QPSK/QAM encoder. The block encoding function **102** encodes the overhead data stream onto the output of the data encoding function **101,** i.e. the transmit data symbols of symbol blocks, by selecting a block modulation scheme from a plurality of block modulation schemes for a symbol block based on the bits of the overhead data stream. Accordingly, the block encoding function **102** generates a plurality of block data symbols for the symbol block based on the payload data stream and the selected block modulation scheme. The block encoding function **102** can thus be regarded as a block constellation encoder.

In detail, the block modulation schemes may be a modification of the data modulation scheme, which can be modified through the block encoding function **102.** Thus, the block modulation schemes can also be complex modulation schemes such as QPSK/QAM modulation schemes. As illustrated in the embodiment of **Fig. 1(a)****,** the block encoding function **102** modifies the transmit data symbols (which have been obtained using the data modulation scheme, e.g. a QPSK modulation scheme) such that a QPSK modulation scheme is selected as a block modulation scheme of a first symbol block and a rotated QPSK modulation scheme is selected as another block modulation scheme for a second symbol block as represented by two example symbol blocks **104, 105.** In some embodiments, the rotation may be performed by the block encoding function **102.** As such, one of the block modulation schemes may be a rotation of another one of the block modulation schemes. As illustrated in the embodiment of **Fig. 1(a)****,** a relative phase shift of 45 degree between the two selected block modulation schemes **104, 105** are exhibited.

It is appreciated that, although **Fig. 1(a)** describes a set of two QPSK constellations for the block modulation schemes, an arbitrary set of constellations are also applicable, e.g. with a larger number of constellations. The skilled person will appreciate that the selection of QAM modulation with different phase rotations (e.g. QPSK modulation schemes) can be implemented with low complexity for the use of transmission of network overhead data. Furthermore, the selectable block modulation schemes may have the same number of constellation points to maintain the transmission symbol rate (e.g. both symbol blocks **104, 105** have the same block length b), and/or the selected block modulation schemes and the data modulation scheme may have a same number of constellation points. Preferably, rectangular constellation schemes (e.g. QPSK, m-QAM, etc.) are used for the data modulation scheme and the block modulation schemes. In some embodiments, the selectable block modulation schemes may have different numbers of constellation points as illustrated in **Fig. 1(b)****.** In this case, symbol block **106** may contain a different number of symbols than symbol block **105.**

The optical modulation device **100** also includes an optical modulator **103** configured to modulate an optical signal using the generated block data symbols generated by the processor **106** (i.e. the data encoding function **101** and the block encoding function **102**). Therefore, the modulated optical signal can carry the payload data stream using the selected block modulation scheme(s) associated with the overhead data stream. By this way, the overhead data stream can be efficiently overlaid on the payload data stream for transmission. In the indicated embodiment of **Fig. 1(a)****,** for transmission using QPSK as the base modulation format, the overlaid information is modulated in the selection of two QPSK constellations with a relative phase shift of 45 degree, which can simplify receiver setup.

In further detail, each symbol block includes one or more consecutive transmit data symbols and the one or more consecutive transmit data symbols within a symbol block are converted, through e.g. the block constellation encoder **102,** into one or more consecutive block data symbols to generate the block data symbols for the symbol block. Moreover, the payload data stream is arranged in the symbol blocks based on a block length which is related to a number of the consecutive transmit data symbols or a number of the consecutive block data symbols within each symbol block. As mentioned above, the number of symbol blocks for a given length of the payload data stream decreases along with the number of block data symbols in each symbol block (i.e. the block length). In other words, the number of blocks to encode a given payload data is reduced when using longer blocks (of course, the number of symbols remains the same). Further, the number of symbol blocks for a given length of the payload data stream relates to the transmission rate of the overhead data stream. Thus, the overhead data stream has a transmission rate depending on the block length. For example, a longer block length may correspond to a lower transmission rate of the overhead data stream, while a shorter block length may correspond to a higher transmission rate of the overhead data stream. It is thus noted that the payload data stream will have a higher transmission rate than the overhead data stream.

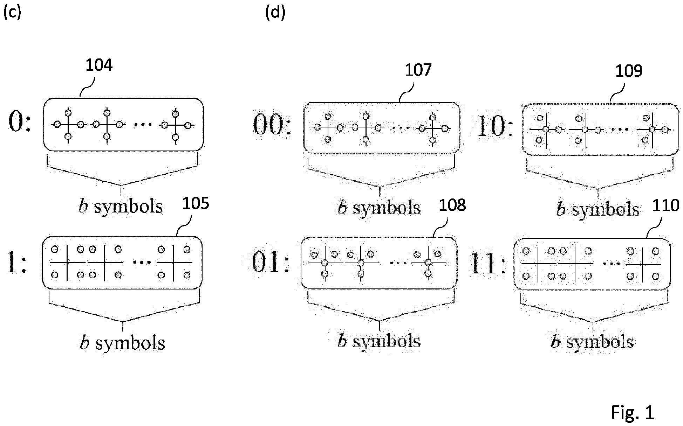

In some embodiments, the processor **106** may perform the data encoding function and the block encoding function concurrently. In particular, the processor 106 divides the payload data stream into blocks, each of which has N symbols (block length) as illustrated by **104, 105.** Considering QPSK modulation for example, each block thus contains 2xN bits of the payload data stream. Further based on the overhead data stream, the payload bits in each block are encoded/modulated using a selected modulation scheme which is associated with a corresponding bit (or a number of bits in case of more than two block modulation schemes) of the overhead data stream. For example, if the first overhead bit is "1", then the 2N payload bits in the first block may be encoded/modulated using the block modulation scheme represented by **105,** while the 2N payload bits in the first block may be encoded/modulated using the block modulation scheme represented by **104** if the first overhead bit is "0". Similarly, if the second overhead bit is "1", then the 2N payload bits in the second block may be encoded/modulated using the block modulation scheme represented by **105,** while the 2N payload bits in the second block may be encoded/modulated using the block modulation scheme represented by **104** if the second overhead bit is "0", which follows the coding rule (for a binary frame) as illustrated in **Fig. 1(c)****.**

More complicated modulation schemes for the overhead bit stream can also be implemented according to the disclosure by applying more than two selected block modulation schemes to a block, each of which represents a group of overhead bits (non-binary frame). For example, a different encoding mapping applying four selectable block modulation schemes (having arbitrary constellation shapes) may be used, each of which representing a group of two overhead bits such as "00", "01", "10" and "11" as illustrated by constellations **107, 108, 109, 110** in **Fig. 1(d)****.** The skilled person will appreciate that more than four selectable block modulation schemes may be applied to modulate a group of three or more overhead bits in a similar manner.

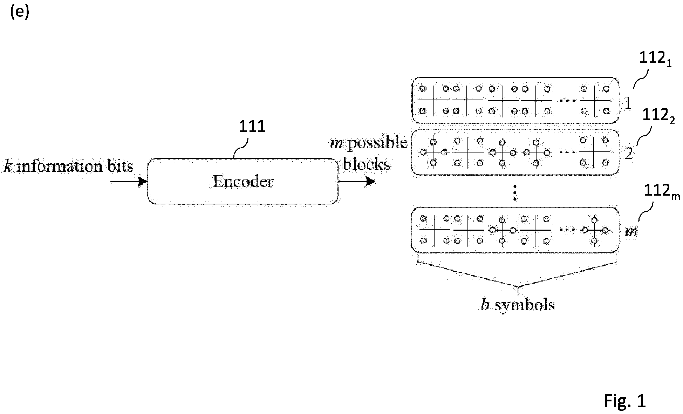

In embodiments, forward-error-correction might be used on the overhead data stream. For example, the choice of constellations within a block might be chosen using a selection of code words, such as illustrated in Fig. 1(e). That means, the bits are not necessarily encoded before modulation, but the blocks can be chosen using code words from a known code. For instance, the two different constellations in the figure might represent "0" and "1" in the overhead data, and these are chosen using a code word of a known code. In other words, the modulation schemes applied to a block are selected based on a code word of the overhead data.

Optionally, the overhead bit stream may be encoded before selecting the block modulation scheme(s). That is, the overhead bit stream may be encoded before performing the block encoding function **102.** In particular, the overhead bit stream can be encoded using a predefined coding scheme (e.g. Hamming codes or Reed-Solomon codes) which maps a group of bits in the overhead stream to another group of bits to form encoded overhead bits. Subsequently, a block (i.e. a symbol block) can be applied with a mix of two or more selected modulation schemes based on the encoded overhead bit stream, the individual modulation schemes respectively applied to a portion of the block. In this case, the combination of the two or more selected modulation schemes for being used in a block represent a group of bits in the encoded overhead bit stream.

**Fig. 1(e)** schematically illustrates an example of applying combined selected modulation schemes for a block based on the encoded overhead bit stream. In the embodiment, the overhead bit stream includes k information bits being sent to a pre-coder **111** before performing the block encoding function **102.** The pre-coder **111** encodes the k information bits according to a predefined coding scheme, so that the encoded overhead bit stream has k' bits, more than the un-encoded overhead bit stream (i.e. a code word of the encoded overhead bit stream is longer than a code word of the un-encoded overhead bit stream). For example, according to a predefined coding scheme, "00" in the un-encoded overhead bit stream may be encoded as "000", "01" in the un-encoded overhead bit stream may be encoded as "011", "10" in the un-encoded overhead bit stream may be encoded as "110" and "11" in the un-encoded overhead bit stream may be encoded as "111". By this way, the encoded overhead bit stream may contain code words having longer Hamming distance (e.g. 2 bits in the example as indicated) compared to the un-encoded overhead bit stream (minimum distance of 1 bit in the example as indicated), which gives better error-correcting capability. The skilled person will appreciate that the pre-coder **111** can map the overhead bit stream to an encoded overhead bit stream having a code word of any length k' (with added redundancy).

In embodiments, the modulation scheme(s) for a block can be selected based on the encoded overhead bit stream, as illustrated by the m possible block modulation schemes **112₁,** ..., **112ₘ** of **Fig. 1(e)** that correspond to the encoded code word with k' bits (with m=2^{k'}). A combination of modulation schemes (i.e. a sequence of predetermined modulation schemes) may be applied to a block as indicated by, for example, Block 2 **112₂** and Block m **112ₘ** of **Fig. 1(e)** where a sequence of two different modulation schemes is applied depending on the encoded code word. As such, by encoding the overhead bit stream to contain longer code words for block modulation selection, more reliable transmission of the second data stream (the overhead bit stream) can be achieved due to the enhanced error-correcting ability. Besides, similar encoding processes may also be applied to the first data stream (the payload data stream).

It is noted that the combined selected block modulation schemes for a block may be further repeated (duplicated) in the block. For example, considering a simple case where a combination of two different constellations A and B (i.e. AA, AB, BA, BB) is applied to a block which contains four symbols (i.e. the block length = 4 symbols), then the constellations A and B can be repeated to allow averaging for low SNR transmissions. For example, the first two symbols of the block are generated using the constellation A and the last two symbols of the block are generated using the constellation B (represented as AABB), which may represent a group of two overhead bits (e.g. "01"). In another example, the first two symbols of the block are generated using the constellation B and the last two symbols of the block are generated using the constellation A (BBAA), which may represent another group of two overhead bits (e.g. "10"). In another example, the four symbols of the block are generated using the constellation A (AAAA), which may represent a group of two overhead bits such as "00". In a further example, if the four symbols of the block are generated using the constellation B (BBBB), which may represent a further group of two overhead bits (e.g. "11").. This schema can be extended for a higher number of overhead bits. Alternatively, instead of repeating individual constellations, entire sequences of constellations can be repeated. In the example of Fig. 1(e), the combination of modulation schemes 112 could be repeated in a bock. By repeating the selected block modulation schemes for a block, the received symbols associated with a selected block modulation scheme may be averaged for detection at receiver side, thereby increasing SNR tolerance as the noise effect can be averaged out and the decision need not to be made for each received symbol.

Accordingly, two or more possible modulation schemes (constellations) may be applied to a block, which can be mapped to more than one overhead bit. The skilled person will appreciate that other combinations of selected modulation schemes for a block and other ways of mapping the selected modulation schemes to overhead bits are also applicable. Furthermore, the repetition of selected block modulation schemes in a block can be also applied to modulate the encoded overhead bit stream having varying code words.

The proposed device superimposes an overlaid channel (for transmitting e.g. an overhead data stream) over a conventional coherent communication channel (for transmitting e.g. a payload data stream) using constellation selection modulation (i.e. modulating a data stream using selectively two or more different modulation schemes). As mentioned above, the same selected constellation may be used for modulation of several symbols, which can be beneficial to decoding/demodulating as the robustness of the overlaid channel can be increased by averaging several symbols over a full block (especially due to the repetition of a selected block modulation scheme applied in a block as indicated above). In particular, the overlaid channel becomes more tolerant to noise by applying longer block length over which symbols are averaged. In view of this, the length of a symbol block may be determined based on SNR value of an optical transmission.

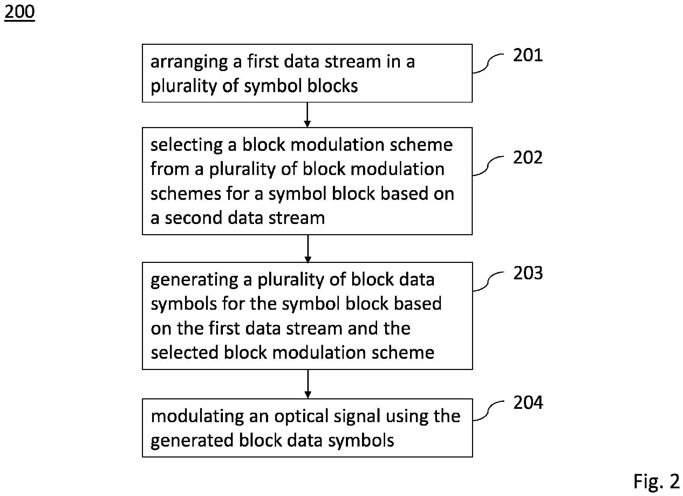

**Fig. 2** illustrates processing steps for the proposed optical modulation method according to embodiments of the disclosure. The method **200** can be implemented at the above indicated optical modulation device 100 by the optical modulator **103** and the processor **106,** e.g. in a DSP. The method **200** comprises arranging (step **201**) the bits of a first data stream in a plurality of symbol blocks.

The method **200** also comprises selecting (step **202**) a block modulation scheme from a plurality of designated block modulation schemes for a symbol block based on a second data stream. The method **200** comprises generating (step **203**) a plurality of block data symbols for the symbol block based on the first data stream and the selected block modulation scheme by applying the selected block modulation scheme to encode a number of bits of the first data stream. The method **200** further comprises modulating (step **204**) an optical signal using the generated block data symbols. Accordingly, the modulated optical signal generated using the method **200** carries the first data stream simultaneously overlaid by the second data stream. As mentioned above, the first data stream may be a payload data stream having a higher transmission rates than the second data stream which may be an overhead network administrative or maintenance data stream.

It should be noted that the device features described above correspond to respective method features that may however not explicitly be described, for reasons of conciseness. The disclosure of the present document is considered to extend also to such method features.

It is therefore appreciated that the proposed optical modulation device and method superimpose an overlaid channel on a conventional modulation scheme using constellation selection modulation over blocks of data. The additional data is encoded in the selection of the constellation used in a block. The bit rate and the error probability of the overlaid channel are flexible and can be varied with the block length. Using two square constellations with a relative phase shift of 45 degree for the constellation selection modulation as shown in **Fig. 1(a)****,** the receiver can be made of low complexity.

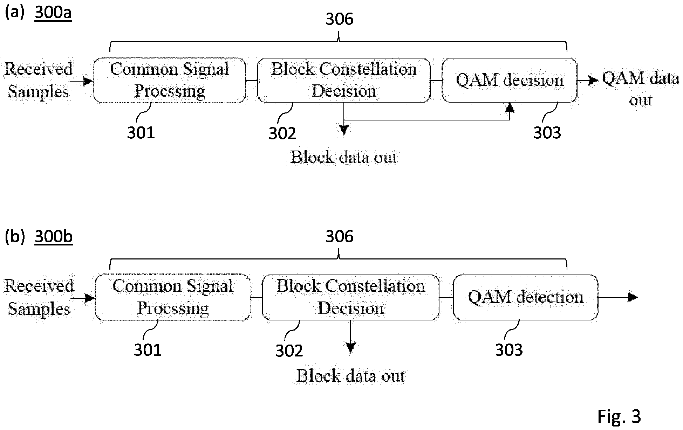

**Fig. 3** is a schematic illustration of possible implementations of an optical demodulation device **300a, 300b** according to embodiments of the disclosure. The optical demodulation device **300a** can be used, for example, in a receiver of an optical communication system, to recover two transmitted data streams from a modulated optical signal received by the optical demodulation device **300a.** The optical demodulation device **300a** includes a signal converting module (not shown) to receive an optical (modulated) signal and convert the signal into a corresponding electrical signal. The skilled person will appreciate that the electrical signal comprises, at given sampling times, a plurality of data symbols which have complex values. Also, the optical demodulation device **300a** includes a processor **306** (e.g. a DSP) for processing and decoding the data symbols of the received signal to recovery the data streams which have been transmitted through a channel of the communication system, e.g. an optical fiber link. According to the embodiment, the data streams received by the optical modulation device **300a** include a payload data stream and an overhead data stream. Similar to the transmitter side, the overhead data stream may carry overhead network information, such as network management information, routing instructions or data needed for a forward error correction decoder. Thus, the data symbols of the received signal contain information of the received data streams, i.e. the payload data stream and the overhead data stream.

It is noted that the data symbols may be arranged in one or more symbol blocks and may be regarded as block data symbols. After the received signal has been converted into an electrical form, the processor **306** may perform a common signal processing function **301** to process the block data symbols of the received signal, such as dispersion compensation, polarization mode dispersion compensation, carrier phase estimation, and so on. The processor **306** further performs a block decoding function **302** and then a data decoding function **303** on the processed block data symbols to extract the received data streams (the payload and the overhead data streams). According to the embodiments, the overhead data stream can be obtained by the block decoding function **302,** and the payload data stream can be obtained by the data decoding function **303.**

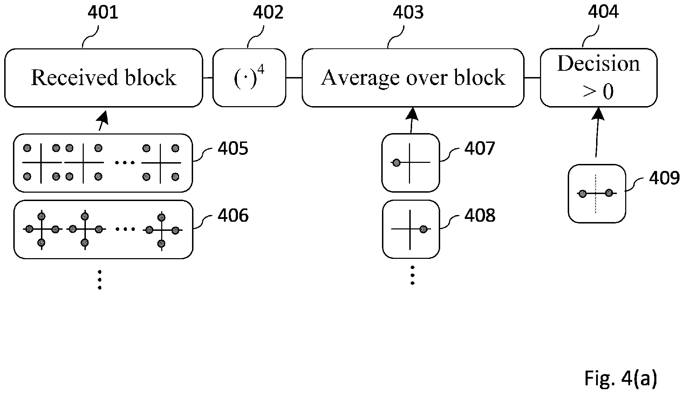

A detailed implementation of the block decoding function **302** is schematically illustrated in **Fig. 4(a)****.** As mentioned, the processed block data symbols of symbol blocks are received by a receiving unit **401** which may also store the received block data symbols in a memory of the demodulation device. In particular, the received block data symbols may have been generated by a transmitter based on different modulation schemes, i.e. the block data symbols of different symbol blocks are generated using different modulation schemes applied to the respective symbol blocks. For example, the block data symbols within a symbol block may have been generated using a rectangular constellation modulation, e.g. a QPSK modulation or an m-QAM modulation. In the embodiment, the received block data symbols are generated based on different QPSK modulation schemes, i.e. two QPSK modulation schemes with a relative phase shift of 45 degree in the constellations as shown by **405, 406.**

A symbol converting operation **402** is then applied to the processed block data symbols of symbol blocks so that the block data symbols have their complex symbol values mapped accordingly. The skilled person may appreciate that, after the symbol conversion, the block data symbols may have their phase and/or amplitude values changed according to the applied symbol converting operation **402.** In case of using a QPSK modulation or an m-QAM modulation for generation of the block data symbols, the block data symbols in each symbol block are converted using a power-of-four operation, which shifts all constellation points of e.g. a QPSK modulation to a same position in the constellation. That is, the converted block data symbols within a symbol block have a same complex symbol value, or at least the converted block data symbols in a symbol block have substantially same complex symbol values close to each other. The complex symbol values of the converted block data symbols in a symbol block may thus have a same symbol sign (e.g. plus or minus) associated with the respective applied modulation scheme for the symbol block. In other words, the sign of the converted symbols can be used to identify the applied modulation scheme. These results of symbol conversion can be seen more clearly by additionally applying a symbol averaging operation **403** to the converted block data symbols for the respective blocks.

In detail, the symbol averaging operation **403** averages the converted block data symbols for each symbol block. The converted block data symbols in each symbol block are averaged over a block length according to which the block data symbols are arranged in the symbol blocks. Thus, the block length is related to a number of the converted block data symbols within each symbol block. In embodiments, the length of a symbol block is determined based on a signal-to-noise-ratio (SNR) value of an optical transmission of the data streams (e.g. the payload data stream). As mentioned above, the overhead data stream has a transmission rate depending on the block length.

After applying the symbol averaging operation **403,** the average block data symbol for each symbol block may have a complex symbol value as illustrated by constellations **407** and **408** corresponding to the transmitted QPSK constellations **405** and **406,** respectively. After applying the symbol converting operation **402** and the symbol averaging operation **403,** the average block symbol of the block symbols according to the constellation **405** is arranged according to the constellation **407** with a single constellation point (which represents the average block data symbol for the symbol block) located on the left side of the horizontal axis (i.e. in case the converted block symbols have negative real values). On the other hand, after averaging, the average block symbol of the block symbols according to the constellation **406** is arranged according to the constellation **408** with a single constellation point (which represents the average block data symbol for the symbol block) located on the right side of the horizontal axis (i.e. in case the converted block symbols have positive real values). Accordingly, the resulting complex symbol value of the average block data symbol for each symbol block is used for determining an applied modulation scheme for each symbol block. More specifically, the sign of the average block data symbol for each symbol block (i.e. a block sign) is used for determination of the applied modulation scheme for each symbol block.

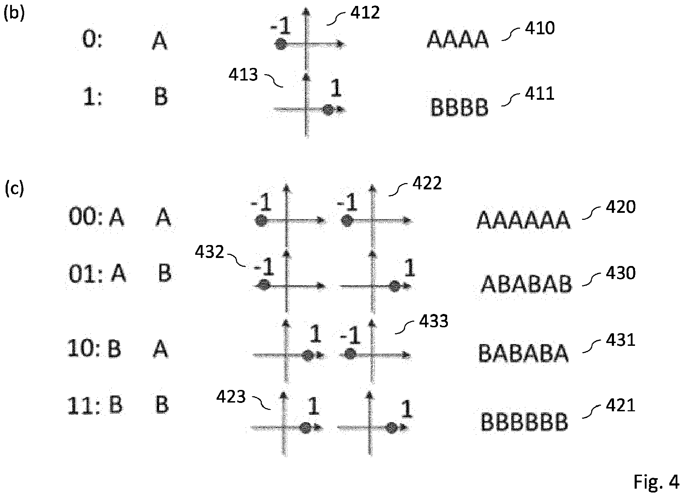

Subsequently, a decision unit **404** determines the applied modulation scheme for each symbol block to recover the overhead data stream based on the determined applied modulation schemes. According to the embodiment, the constellation at the decision unit **404** is illustrated as **409,** because the decision unit **404** receives the average block data symbol of each symbol block modulated using the applied modulation scheme having constellations indicated either by **407** or **408.** In the illustrated example, the decision unit **404** determines whether the complex symbol value of the average block data symbol for a symbol block has a positive sign or a negative sign in its real component, and the overhead data stream can be obtained based on the decision. For example, a positive sign may indicate that the corresponding overhead bit is "1", while a negative sign may indicate that the corresponding overhead bit is "0", or vice versa. As further illustrated in **Fig. 4(b)****,** when constellation A indicative of bit "0" is applied to the four block data symbols in block **410** and constellation B indicative of bit "1" is applied to the four block data symbols in block **411,** the corresponding resulting constellations after performing symbol converting operation **402** (power-of-four operation) are shown by **412** and **413,** respectively, where a complex symbol value with real part "-1" in constellation **412** indicates bit "0", while a complex symbol value with real part "+1" in constellation **413** indicates bit "1". By this way, the information regarding the overhead data stream can be extracted from the received block data symbols.

The skilled person may appreciate that the determination performed by the decision unit **404** does not limit to the above mentioned example. In case that a combination of selected block modulation schemes (i.e. a sequence of block modulation schemes) has been applied at the transmitter side, as mentioned above for **Fig. 1(e)****,** the decision unit **404** may determine a sign of a complex symbol associated with an applied block modulation scheme in a block accordingly. As illustrated in **Fig. 4(c)****,** combined constellation "AA" indicative of code word "00" is applied to the six block data symbols in block **420** (by repeating three times) and combined constellation "BB" indicative of code word "11" is applied to the six block data symbols in block **421** (by repeating three times), the corresponding resulting combined constellations after performing symbol converting operation **402** (power-of-four operation) are shown by **422** and **423,** respectively, where combined complex symbol values with real parts [-1, -1] in constellation **422** indicates code word "00", while combined complex symbol values with real parts [+1, +1] in constellation **423** indicates bit "11". Besides, combined constellation "AB" indicative of code word "01" is applied to the six block data symbols in block **430** (by repeating three times) and combined constellation "BA" indicative of code word "10" is applied to the six block data symbols in block **431** (by repeating three times), the corresponding resulting combined constellations after performing symbol converting operation **402** (power-of-four operation) are shown by **432** and **433,** respectively, where combined complex symbol values with real parts [-1, +1] in constellation **432** indicate code word "01", while combined complex symbol value [+1, -1] in constellation **433** indicate bit "11".

In embodiments, code words from a known code can be used to select code blocks on the receiver side and the data is mapped to this. Thus, no explicit decoding is necessary, rather just de-mapping based on the known frames (which does not need to be all the code words from a known code). In some cases, the received symbols are simply compared to the different blocks that can be transmitted. For instance, 4 different blocks are possible with different constellations within each block (which can be selected as code words from a known code). In other words, the received symbols are compared to the sequence of constellations that are allowed by the applied code and the best matching code word determined.

Returning to **Fig. 3****,** the received block data symbols are further passed to the data decoding function **303** to recover the payload data stream. By this, way, the payload data stream can be obtained by decoding the received block data symbols. In some embodiments, the payload data stream is obtained from the block data symbols under consideration of the obtained overhead data stream. In some embodiments, the payload data stream is obtained from the block data symbols under consideration of the determined modulation schemes applied to the symbol blocks. In some embodiments, the payload data stream is obtained from the block data symbols without having knowledge regarding the overhead data stream or the applied block modulation scheme as illustrated by the optical demodulation device **300b** in **Fig. 3(b)****.** The skilled person will appreciate that the optical demodulation devices **300a, 300b** are formed with the same parts but showing variations regarding how the processor **306** performs the data decoding function **303.** For example, the data decoding function **303** may apply the determined modulation schemes for the symbol blocks to decode the payload data stream from the received block data symbols. For each block, the applied modulation scheme is determined as explained above by the block decoding function **302** and supplied to the data decoding function **303,** which then decodes the payload data from the data symbols using the determined modulation scheme of the block.

As such, the proposed optical demodulation device provides an efficient implementation for determining an overhead data stream overlaid on a payload data stream with minor additional complexity compared to conventional receiver structures. In particular, in case of rectangular constellations, such as QPSK/QAM constellations, it is sufficient for the detection scheme of the constellation modulation to apply a power-of-four operation followed by averaging over the block. The final decision can be made binary on the sign of the output of the averaging operation. Also, the block information is then optionally passed to the following parts of the receiver (e.g. the data decoding function **303**), such that the information which of the possible constellations were applied can be utilized in the remaining parts of the receiver. It is further appreciated that, although the example of the block decoding function **302** as shown herein relates to decoding an overhead bit (e.g. "0" or "1") based on a positive sign or a negative sign for a symbol block, different decoding mappings may be considered in case of more complicated modulations for encoding the overhead bit stream, depending on how the processor **106** has performed the data/block encoding function at transmitter side.

Accordingly, by averaging over the blocks of symbols over which the constellation selection modulation was applied for an overlaid channel, the performance of demodulating/decoding of the received data stream can be improved, in particular for small SNR values. The flexibility of the overlaid channel can be enhanced by adapting the block length. It is further appreciated that the proposed demodulation device can efficiently recover the overhead data stream as well as the payload data stream without much extra processing.

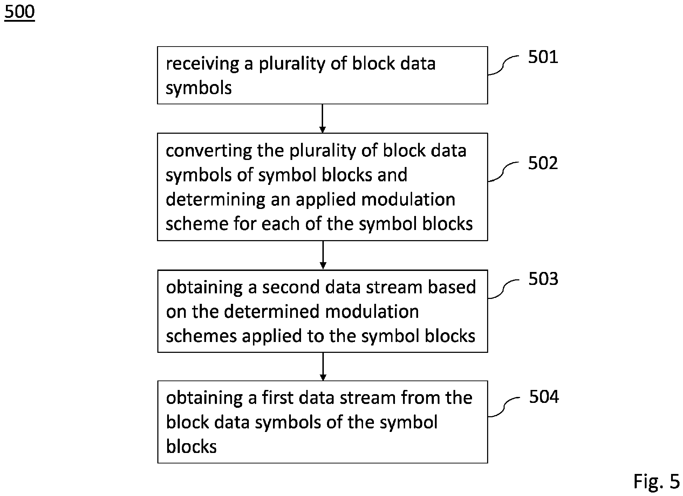

**Fig. 5** illustrates processing steps for the proposed optical demodulation method according to embodiments of the disclosure. The method **500** can be implemented at the above indicated optical demodulation devices **300a, 300b** by the processor **306,** e.g. in a DSP. The method **500** comprises receiving (step **501**) a plurality of block data symbols. In particular, the block data symbols are arranged in one or more symbol blocks. The method **500** also comprises converting (step **502**) the plurality of block data symbols of symbol blocks and determining an applied modulation scheme for each of the symbol blocks. The method **500** comprises obtaining (step **503**) a second data stream based on the determined modulation schemes applied to the symbol blocks. The method **500** further comprises obtaining (step **504**) a first data stream from the block data symbols of the symbol blocks. Accordingly, a data stream carrying the first data stream simultaneously overlaid by the second data stream can be properly decoded using the method **500.** As mentioned above, the first data stream may be a payload data stream having a higher transmission rate than the second data stream which may be an overhead data stream.

It should be noted that the device features described above correspond to respective method features that may however not explicitly be described, for reasons of conciseness. The disclosure of the present document is considered to extend also to such method features.

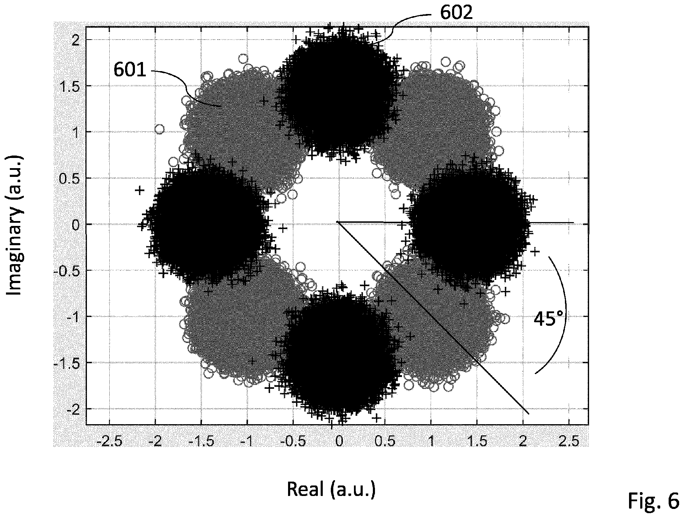

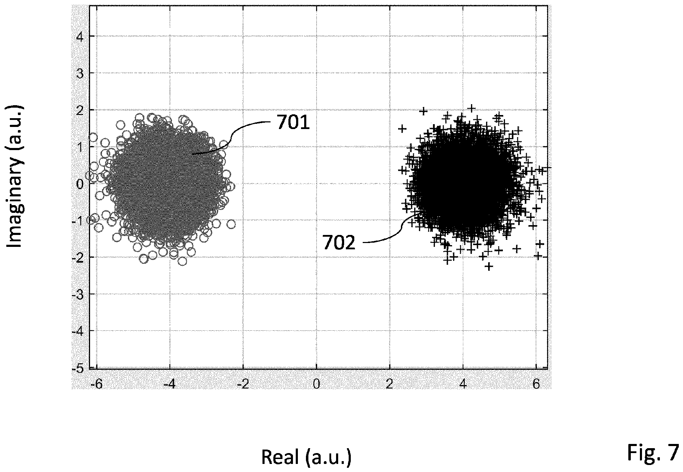

**Fig. 6** graphically illustrates a constellation diagram of received block data symbols according to embodiments of the disclosure. The result illustrates a transmitted QPSK signal with the overlaid constellation selection modulation at a SNR value of 15dB, which is measured before applying the block decoding function **302.** As indicated, two QPSK modulation formats are used as the block modulation schemes. One can observe two QPSK constellations with a relative 45-degree phase shift as represented by circle patterns **601** and by cross patterns **602,** which correspond to the transmitted constellations **405** and **406,** respectively. After applying the symbol converting operation **402** (i.e. the power-of-four operation) and the symbol averaging operation **403** (e.g. averaging over the block length of **16** symbols) to the block symbols, the constellation diagram is shown in **Fig. 7****,** where constellation patterns **701, 702** indicate the two transmitted constellations. As shown, circle patterns **701** are associated with the circle patterns **601** and cross patterns **702** are associated with the cross patterns **602.** It is noted that the circle patterns **701** indicate the first block constellation **407,** while the cross patterns **702** indicate the second block constellation **408.** The constellation diagram of **Fig. 7** reflects the constellation **409** based on which the decision unit **404** makes a decision for the applied modulation scheme and supports extracting the information regarding the overhead data stream. As seen, the decision of the transmitted constellation can be made on the sign of the real part of the processed signal.

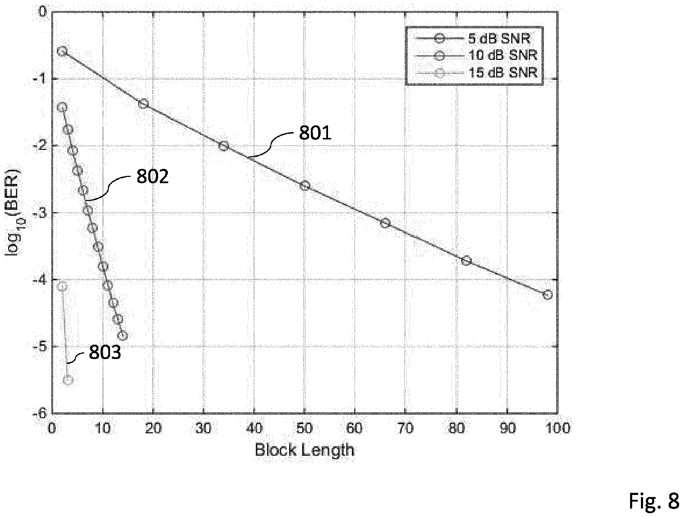

**Fig. 8** graphically illustrates the dependency of the block length on the bit error rate (BER) plotted as a function of different SNR according to embodiments of the disclosure. One can observe that BER of the constellation selection modulation varies with the block length for SNR values of 5dB, 10dB and 15dB.
These results are obtained using the optical demodulation device **300a, 300b** with QPSK modulation formats considered as the block modulation schemes. Curve **801** represents the BER variation over block length for a SNR value of 5dB. Curve **802** represents the BER variation over block length for a SNR value of 10dB. Curve **803** represents the BER variation over block length for a SNR value of 15dB. The general behavior shows that better performance can be obtained by increasing block length, which is contributed by the averaging over the converted block data symbols in a block. As seen, the length of the block that is needed is dependent on the SNR regime that the system is operating in. In a high SNR regime, the required block length is shorter than in a low SNR regime as indicated by curves **803** and **801,** respectively. To reach a similar BER performance for different SNRs, a small number of block data symbols is sufficient for averaging over a block when SNR is high (e.g. SNR = 15dB) as compared to low-SNR cases (e.g. SNR = 5dB) where averaging over a larger block length is needed to achieve the same BER.

It is further appreciated that the bit rate of the overlaid block constellation selection modulation is dependent on the block size. Furthermore, since block modulation information may be passed forward to the remaining parts of the receiver (e.g. the embodiment of Fig. 3(a)), a block error may cause a burst of errors in the data detection (e.g. QAM detection). Thus, one should ensure that the symbol blocks do not impose errors after the block decoding. To reduce block errors (i.e. for error free operation), a sufficiently long block length is preferably considered, which requires low complexity of implementation. Besides, a forward error correction scheme may be applied for the block constellation modulation bits (the overhead bits) to achieve optimized decoding performance. For example, a low-complexity forward error correction (FEC) scheme can be applied to correct the burst errors. Alternatively, interleaving over the symbols may be applied to increase block error tolerance.

By applying the proposed devices and methods, the overlaid information can be used for applications such as transmitting network information or information that is needed for the forward error correction decoding of the data symbols (e.g. QAM symbols). It is advantageous that the bits of the constellation selection modulation (the second data stream) are accessible before the forward error correction decoding stage on the first data stream, which can open up for related new technologies.

Although the above indicated embodiments focus on using the QPSK modulation formats for block modulation to encode/decode an additional data stream for the overlaid channel, any other modulation schemes may also be considered as suitable for implementing the general concept of the disclosure. Compared to the prior art solutions, the disclosure allows having access to a higher bitrate overlaid channel which can be detected with simple signal processing. In other words, by means of transmission of network management information carried out using the proposed methods and devices, a transmitter can pass the information, through the overlaid channel, to a receiver with higher speed and lower complexity than the conventional technique using slow intensity modulation.

The functions of the various elements shown in Figs. 1, 3 and 4, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context. In embodiments, some of above functions may be implemented by optical signal processing.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

It should be further noted that the description and drawings merely illustrate the principles of the proposed apparatus and method. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed device. Furthermore, all statements herein providing principles, aspects, and embodiments of the invention, as well as specific examples thereof, are intended to encompass equivalents thereof.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. An optical modulation method comprising:
arranging a first data stream in a plurality of symbol blocks;
selecting at least one block modulation scheme from a plurality of block modulation schemes for a symbol block based on a second data stream;
generating a plurality of block data symbols for the symbol block based on the first data stream and the selected at least one block modulation scheme; and
modulating an optical signal using the generated block data symbols.

2. The method of claim 1, wherein at least two block modulation schemes of the plurality of block modulation schemes have a same number of constellation points.

3. The method of claim 2, wherein one of the block modulation schemes is a rotation of another one of the block modulation schemes.

4. The method of any of claims 1 - 3, wherein at least one block modulation scheme of the plurality of block modulation schemes comprises one of: a rectangular constellation scheme, a QPSK modulation scheme, and an m-QAM modulation scheme.

5. The method of any of previous claims, wherein the arranging a first data stream in a plurality of symbol blocks comprises encoding the first data stream into a plurality of transmit data symbols using a data modulation scheme, each of the symbol blocks comprising one or more consecutive transmit data symbols, wherein the data modulation scheme and the block modulation schemes have a same number of constellation points.

6. The method of claim 5, wherein the generating a plurality of block data symbols for the symbol block comprises converting the one or more consecutive transmit data symbols within the symbol block into one or more consecutive block data symbols such that the optical signal is modulated to carry the first data stream using the selected block modulation scheme associated with the second data stream.

7. The method of any of previous claims, further comprising encoding the second data stream and selecting a plurality of block modulation schemes for the symbol block based on the encoded second data stream.

8. The method of any of previous claims, wherein the length of a symbol block is determined based on a signal-to-noise-ratio (SNR) value of an optical transmission using the modulated optical signal.

9. The method of any of previous claims, wherein the second data stream
carries overhead network information.

10. An optical demodulation method comprising:
receiving an optical signal;
converting the optical signal into a plurality of block data symbols, wherein the block data symbols are arranged in one or more symbol blocks;
converting the plurality of block data symbols of symbol blocks and determining at least one applied modulation scheme for each of the symbol blocks;
obtaining a second data stream based on the determined modulation schemes applied to the symbol blocks; and
obtaining a first data stream from the block data symbols of the symbol blocks.

11. The method of claim 10, wherein the applied modulation scheme for each
of the symbol blocks is determined based on the complex values of the converted block data symbols of the respective symbol block.

12. The method of any of claims 10 - 11, wherein each of the symbol blocks
comprises one or more consecutive block data symbols, and the converting the block data symbols comprises converting the one or more consecutive block data symbols within each of the symbol blocks, the method further comprising averaging, for each of the symbol blocks, the converted one or more consecutive block data symbols, wherein the applied modulation scheme for each symbol block is determined based on the complex value of the averaged block data symbols of the respective block.

13. The method of any of claims 10 - 12, wherein the one or more of the
block data symbols in each symbol block are converted using a power-of-four operation.

14. An optical modulation device for overlaying a second data stream on a
first data stream, the device comprising:
a processor configured to:
arrange the first data stream in a plurality of symbol blocks;
select at least one block modulation scheme from a plurality of block modulation schemes for a symbol block based on a second data stream; and
generate a plurality of block data symbols for the symbol block based on the first data stream and the selected at least one block modulation scheme; and
an optical modulator configured to modulate an optical signal using the generated block data symbols.

15. An optical demodulation device for receiving a second data stream
overlaid on a first data stream, the device comprising:
a signal converting module to convert an optical signal into a corresponding electrical signal, the electrical signal comprising a plurality of block data symbols, wherein the block data symbols are arranged in one or more symbol blocks; and
a processor configured to:
convert the plurality of block data symbols of symbol blocks and determine at least one applied modulation scheme for each of the symbol blocks;
obtain a second data stream based on the determined modulation schemes applied to the symbol blocks; and
obtain a first data stream from the block data symbols of the symbol blocks.
